# FASCICULE DE BREVET EUROPEEN

(11) **EP 0 532 733 B1**
(45) Date de publication et mention de la délivrance du brevet: **17.12.1997**
(21) Numéro de dépôt: 92909051.2
(22) Date de dépôt: 27.03.1992
(51) Int. Cl.: G01N 30/94

(54) **PROCEDE ET DISPOSITIF DE CHROMATOGRAPHIE PLANAIRE METTANT EN OEUVRE UNE PRESSION REDUITE COMME PRINCIPE DE FLUX FORCE**
VERFAHREN UND VORRICHTUNG DER DUENNSCHICHTCHROMATOGRAPHIE UNTER BENUETZUNG REDUZIERTEN DRUCKES ZUR ERZEUGUNG ERZWUNGENEN FLUSSES
THIN-LAYER CHROMATOGRAPHY PROCESS AND DEVICE BRINGING INTO PLAY A REDUCED PRESSURE AS THE FORCED FLOW MEANS

(30) Priorité: 29.03.1991 FR 9103849
(43) Date de publication de la demande: 24.03.1993
(73) Titulaire: EUROPLANAIRE, F-77100 Mareuil-les-Meaux (FR)
(72) Inventeur: POSTAIRE, Eric, F-92170 Vanves (FR); REGNAULT, Corinne, F-92160 Antony (FR); DELVORDRE, Pascal, F-78360 Montesson (FR)
(74) Mandataire: Orès, Bernard
(86) Numéro de dépôt international: FR9200275
(87) Numéro de publication internationale: WO9217777

(56) Documents cités:
- EP-A- 0 060 709
- DE-A- 2 412 524
- DE-A- 3 824 896
- DE-C- 842 863
- GB-A- 1 262 493
- US-A- 3 629 098

## Description

La présente invention est relative à un dispositif de chromatographie planaire mettant en oeuvre une pression réduite comme flux forcé.

La chromatographie en couche mince (CCM), également appelée chromatographie planaire est une méthode de séparation par migration différentielle entre une phase stationnaire et une phase mobile.

Les premières CCM ont été réalisées sur des plaques de silice, dont la granulométrie était de l'ordre de 15 µm et l'épaisseur d'environ 1 mm.

La séparation des produits chromatographiés peut être améliorée lorsque l'on diminue le diamètre des grains et/ou l'épaisseur de la plaque ; on obtient alors des plaques dites HPTLC *(High Performance Thin Layer Chromatography).* Cette amélioration entraîne un inconvénient majeur, à savoir l'augmentation du temps nécessaire pour atteindre une hauteur équivalente à un plateau théorique donné, et ce en raison de la diminution du diamètre des grains.

Pour remédier à cet inconvénient, on a proposé plusieurs solutions :
a. forcer l'éluant et augmenter sa vitesse à travers la plaque en utilisant des pompes. La Demande de Brevet Européen n° 0 060 709 décrit une méthode de ce type, dans laquelle le solvant est forcé par surpression.
   Cette solution présente notamment les inconvénients suivants :
   . l'adsorbant sur les plaques, n'est pas recouvert hermétiquement par la membrane, ce qui entraîne une limitation à la migration du solvant ;
   . le solvant peut migrer au dessus de la couche d'adsorbant, c'est-à-dire entre la membrane et l'adsorbant, et non dans l'adsorbant.
b. pour pallier les inconvénients de cette méthode et notamment les distances de migration limitées, une équipe hongroise a développé une nouvelle méthode de chromatographie planaire liquide, appelée OPTLC *(Overpressured Thin Layer Chromatography),* notamment décrite dans les articles suivants : E. TYHAK et al. (J. Chromat., 1979, **174**, 75-81 ; J. Chromat., 1981, **211**, 45-51 ; J. Chromat., 1989, 471, 375-387) ; H.F. HAUCK et al. (J. Chromat., 1983, **262**, 113-120) ; E. TYHAK (J. Pharm. Biomed. Anal., 1987, **5**, 3, 191-203) ; Z. WITKIEWICZ et al. (J. Chromat., 1986,**373**, 111-140) et les Demandes de brevets français suivants : n° 2 483 248, n° 2 495 779, n° 2 575 810 et n° 2 580 406. La caractéristique principale de cette méthode réside dans le fait que la couche d'adsorbant de la plaque est complètement recouverte par une membrane flexible qui est pressurisée et la phase mobile est introduite dans la couche mince, sous pression, à l'aide d'une pompe.

Un dispositif de mise en oeuvre de cette méthode est notamment décrite comme suit dans la Demande de brevet 2 483 248 ou la Demande de brevet 2 580 406 : une plaque de CCM placée sur un support en verre ou en plastique, comprenant une partie inférieure et une partie supérieure, est recouverte complètement à sa partie supérieure d'une membrane en plastique (membrane de pression), bien adaptée à sa surface, en raison de la pression de gaz appliquée dans l'espace délimité par la membrane et la partie supérieure du bloc de support du dispositif.

L'entrée de gaz et la jauge de pression (manomètre, par exemple), en combinaison avec une seringue pour l'introduction du solvant et une entrée pour l'introduction de l'échantillon sous pression sont à la partie supérieure du bloc-support. Dans ce dispositif, la pression externe sur la membrane doit toujours être supérieure à la pression exercée sur l'éluant (solvant) et entraîne ainsi une surpression. La partie supérieure et la partie inférieure du bloc-support sont bloquées à l'aide de clips.

Ce dispositif et le procédé qui en découle, présentent un certain nombre d'avantages et notamment permettent d'optimiser les conditions de séparation en ajustant le débit d'éluant. Toutefois, l'OPTLC présente néanmoins un certain nombre d'inconvénients :
- la nécessité de préparer les plaques de chromatographie, préalablement à leur utilisation, pour créer 4 joints étanches ;
- la présence d'une phase vapeur au niveau de la couche adsorbante, pendant le développement ; en effet, une telle phase vapeur a l'inconvénient de modifier la sélectivité (pouvoir de séparation) de la phase mobile, surtout dans le cas de mélanges de solvants, de réduire le parcours des solutés (Rf) de 20 à 40 %, de diminuer le Rf maximum, au delà duquel aucune séparation n'est possible, à des valeurs comprises entre 0,6 et 0,8 (formation d'un front virtuel) et d'entraîner également la démixtion de la phase mobile et la modification de la composition de cette dernière ;
- la nécessité notamment de deux pompes à pression, une pompe à éluant et une pompe pour la mise sous pression de la plaque par l'intermédiaire de la membrane de pression, qui adhère hermétiquement à ladite plaque.

c. d'autres méthodes ont également été mises en oeuvre ; notamment celle décrite dans la Demande de Brevet Allemande n° 2412524 est relative à un procédé de séparation d'un mélange par CCM dans lequel le mouvement du solvant à travers la couche d'adsorbant se fait par capillarité.

La présente invention s'est, en conséquence, donné pour but de pourvoir à un dispositif de chromatographie planaire en flux forcé qui répond mieux aux nécessités de la pratique que les dispositifs en surpression utilisés jusqu'à présent, notamment en ce qu'il a l'avantage de ne nécessiter aucune préparation préalable de la plaque (rigide ou souple) de chromatographie et de ne pas entraîner le développement d'une phase vapeur et en ce qu'il est d'une utilisation particulièrement simple.

La présente invention a pour objet un dispositif de chromatographie planaire à développement en flux forcé du type comprenant une chambre de développement, contenant au moins une plaque de chromatographie recouverte d'une couche d'adsorbant approprié et des moyens pour recouvrir la plaque, lequel dispositif est caractérisé en ce qu'il comprend en outre des moyens de mise en pression réduite de ladite chambre et de ladite couche d'adsorbant, couplés à un moyen de réglage d'un gradient décroissant de pression et en ce que les moyens pour recouvrir ladite/lesdites plaques sont hermétiques et constitués d'une membrane hydrophobe et imperméable aux solvants de migration.

Selon un mode de réalisation avantageux dudit dispositif, ledit moyen de mise en pression réduite est notamment une pompe à vide.

Le moyen de réglage du gradient décroissant de pression peut être représenté par un obturateur approprié et, de manière non limitative, par une vis micrométrique couplée à un moteur pas-à-pas.

Selon un autre mode de réalisation avantageux dudit dispositif, ladite membrane est constituée d'une mousse de polyéthylène à cellules fermées.

Ladite membrane de polymère est soit de dimension identique à la plaque de chromatographie, soit légèrement plus petite que cette dernière.

Ce dispositif crée, de manière inattendue, une mise en pression réduite homogène au niveau de la chambre de développement, et en conséquence au niveau de la couche adsorbante et provoque ainsi une bonne application de la membrane de polymère sur le support chromatographique.

Ce dispositif présente un certain nombre d'avantages par rapport à l'OPTLC, outre sa simplicité de mise en oeuvre :
- le vide créé dans la chambre de développement, notamment à l'aide d'une seule pompe, permet à la fois :
   . d'appliquer la membrane de polymère sur la plaque de chromatographie, de façon homogène,
   . de permettre la migration de la phase mobile par "traction", à vitesse constante, et non par "poussée" comme cela est le cas dans les systèmes par surpression, ce qui a l'avantage d'accroître la sensibilité du dispositif chromatographique et de diminuer le temps de migration (obtention de résultats dans un temps nettement plus court que dans les dispositifs de l'Art antérieur) et
   . de pouvoir utiliser n'importe quelle plaque chromatographique du commerce.

L'ensemble de ces caractéristiques, propres au dispositif conforme à l'invention, permet, en outre :
- d'éviter le développement de la phase vapeur de la plaque, et
- de dégazer la plaque.

Un tel dispositif, en évitant le développement d'une phase vapeur, permet un développement correspondant à un phénomène linéaire et offre des performances de séparation nettement améliorées, comme le montre l'application de la formule Z = kt, dans laquelle Z : distance de migration ; k : constante ; t : temps de migration.

Les avantages alors obtenus sont :
- l'allongement de la distance de séparation et
- la possibilité de l'optimisation de la traction par le réglage du gradient décroissant de pression, à température constante, mais homogène au niveau de la couche d'adsorbant, du type ΔP = f(t).

Le mode linéaire de variation ΔP = a(t) + b correspond à une meilleure progression de la phase mobile, et donc à une meilleure séparation. La vitesse de migration est dépendante de la variation de pression appliquée (gradient) et elle n'est alors influencée que par la densité et la viscosité de la phase mobile et la température de la chambre de développement.

Selon un autre mode de réalisation avantageux dudit dispositif, il peut comprendre plusieurs plaques chromatographiques séparées par une membrane appropriée, ce qui permet une analyse simultanée de plusieurs paramètres et/ou la séparation d'un grand nombre de solutés en un seul développement.

La présente invention a également pour objet un procédé de détection et/ou de dosage en chromatographie planaire, dans une chambre de développement chromatographique contenant au moins une plaque de chromatographie appropriée recouverte d'une couche d'adsorbant convenable, caractérisé en ce que la migration de la phase mobile à travers la phase stationnaire est réalisée par traction, par application, dans ladite chambre de développement, d'une pression réduite homogène au niveau de ladite couche d'adsorbant recouvrant ladite plaque de chromatographie, elle-même recouverte d'une membrane hydrophobe et imperméable aux solvants de migration, lequel procédé comprend les étapes suivantes :
(a) création d'une réduction de pression graduelle dans la chambre de développement et dans la couche d'adsorbant, en fournissant un gradient décroissant de pression,
(b) réalisation de la migration d'une phase mobile à travers une phase stationnaire, dans les conditions de l'étape (a) et
(c) détection et développement des éléments ayant migré.

Outre les dispositions qui précèdent, l'invention comporte encore d'autres dispositions, qui ressortiront de la description qui va suivre.

L'invention sera mieux comprise à l'aide du complément de description qui va suivre, qui se réfère à des exemples de mise en oeuvre du procédé conforme à l'invention et à une description détaillée du dispositif de l'invention, avec référence aux dessins annexés dans lesquels :
- la figure 1 représente une vue en perspective d'un mode de réalisation préféré du dispositif conforme à l'invention, à une plaque ;
- la figure 2 représente une coupe transversale du mode de réalisation de la figure 1 ;
- la figure 3 représente une vue illustrant le fonctionnement d'un dispositif conforme à l'invention ;
- la figure 4 représente une courbe qui montre l'influence de la pression sur la distance parcourue par le solvant ;
- la figure 5 représente une autre vue illustrant le fonctionnement d'un dispositif conforme à l'invention comprenant un moyen de réglage du gradient décroissant de pression.

Il doit être bien entendu, toutefois, que ces dessins et les parties descriptives correspondantes, sont donnés uniquement à titre d'illustration de l'objet de l'invention, dont ils ne constituent en aucune manière une limitation.

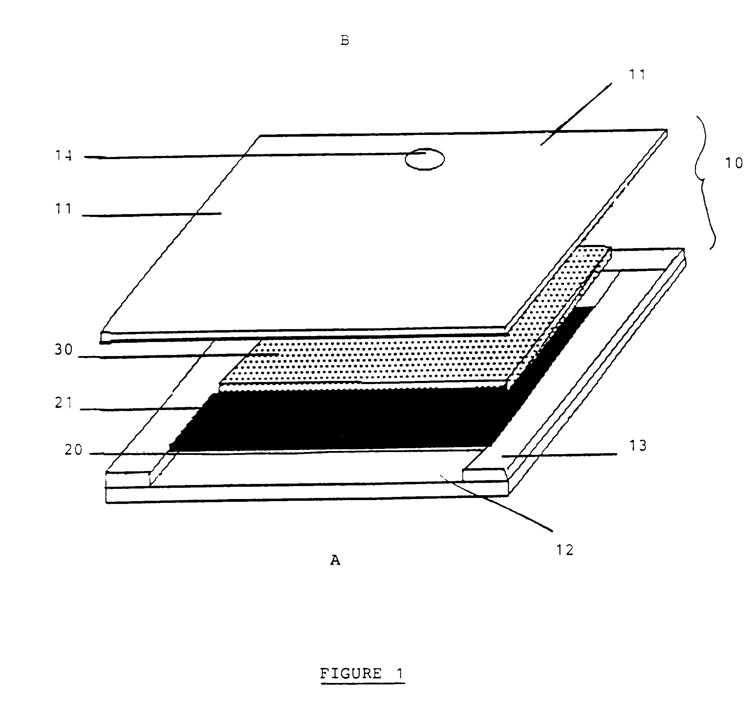

On se réfère d'abord aux figures 1 à 4, qui illustrent un mode de réalisation du dispositif conforme à l'invention.

La figure 1 représente une vue en perspective d'un mode de réalisation préféré du dispositif conforme à l'invention, comprenant une chambre de développement chromatographique 10 délimitée, dans la réalisation représentée, par les parois 11 et 12 ; la paroi inférieure (paroi 12) est avantageusement associée à un étrier 13, qui permet d'obtenir une chambre de développement de taille plus ou moins importante, selon les besoins. La chambre de développement 10 est associée à des moyens de mise sous pression réduite, non représentés, au niveau de l'orifice 14.

La chambre de développement 10 contient, dans la réalisation représentée, une plaque chromatographique 20, recouverte d'une couche adsorbante convenable pour la chromatographie sur couche mince à réaliser et une membrane polymérique 30 qui s'applique hermétiquement et de manière homogène, sur ladite couche adsorbante, lors de l'application de la pression réduite.

Les parois 11 et 12 sont fixées par tout moyen approprié.

Les plaques chromatographiques 20 sont, de préférence, et ce, de manière non limitative, des plaques de verre pré-enduites d'un gel de silice ("KIESELGEL" G60 F254, MERCK).

La membrane polymérique 30 est de préférence, mais de manière non limitative, une membrane polyéthylénique hydrophobe à cellules fermées ("RECTICEL", FRANCE ; dimensions 180 x 200 x 3 mm) qui fournit une pression légère sur la surface de la plaque chromatographique 20 ; ainsi, la seule voie de passage pour le solvant, durant la chromatographie, est à l'intérieur de la couche adsorbante.

Les caractéristiques physico-chimiques de cette membrane polyéthylénique sont les suivantes :

**Tableau I**

| | |
|---|---|
| . Capacité d'absorption d'eau | 0 % |
| . Ignibilité | inflammable |
| . Masse volumique | 30 kg/m³ |
| . Perte à la dessiccation | 1 % |
| . Stabilité (72 h) | |
| à haute température (110°c) | pas de changement |
| à basse température (-18°C) | pas de changement |
| à la lumière UV (350 nm, 32°C) | pas de changement |

Le Tableau II ci-après précise le comportement de cette membrane vis-à-vis des solvants communément utilisés en CCM.

**Tableau II**

| SOLVANT | COEFFICIENT DE DILATATION |
|---|---|
| eau | < 5 % |
| méthanol | 14 % |
| éthanol | 16 % |
| n butanol | 16 % |
| acétone | 16 % |
| heptane | 15 % |
| toluène | 32 % |
| chloroforme | 29 % |
| éthyle acétate | 16 % |
| diéthyle éther | 13 % |
| hexane | 16 % |
| acétonitrile | 16 % |
| méthyle éthyle cétone | 16 % |
| acide chlorhydrique | 20 % |
| acide acétique | 16 % |
| acide formique | < 5 % |
| ammoniaque | 17 % |
| pyridine | 16 % |

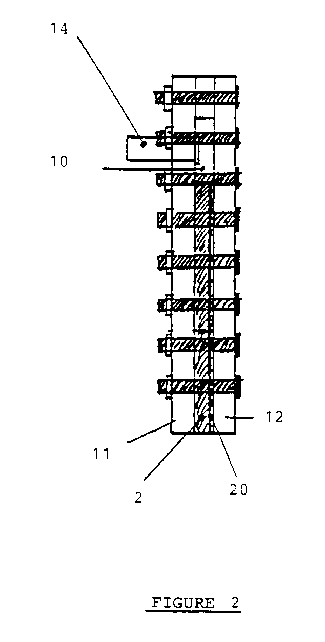

La figure 2 représente une coupe transversale du mode de réalisation de la figure 1, en position fermée.

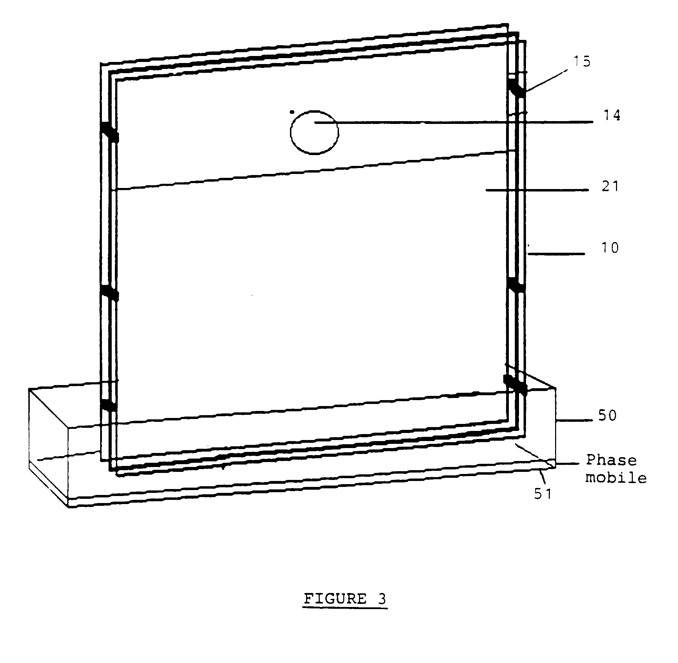

La figure 3 représente une vue en perspective du mode de réalisation de la figure 1.

Le fonctionnement de tels dispositifs, illustré à la figure 3, est le suivant :

Après dépôt des échantillons à analyser sur la couche adsorbante de la plaque de chromatographie 20, celle-ci est introduite dans la chambre de développement 10, de telle sorte que la partie qui contient les dépôts d'échantillon se trouve du côté opposé (côté A du dispositif conforme à l'invention) à l'orifice 14 (côté B du dispositif conforme à l'invention), on immerge le côté A du dispositif conforme à l'invention, hermétiquement fermé à l'aide des moyens de fermeture 15, dans un réservoir 50 contenant la phase mobile 51 (solvant approprié) et on connecte la chambre de développement à une trompe à vide, par l'intermédiaire de l'orifice 14.

Ce dispositif crée une mise en pression réduite homogène au niveau de la chambre de développement et plus particulièrement au niveau de la couche adsorbante et permet de réaliser une CCM à pression réduite, encore dénommée *Vacuum Planar Chromatography* (VPC) ou Chromatographie Sous Vide (CSV).

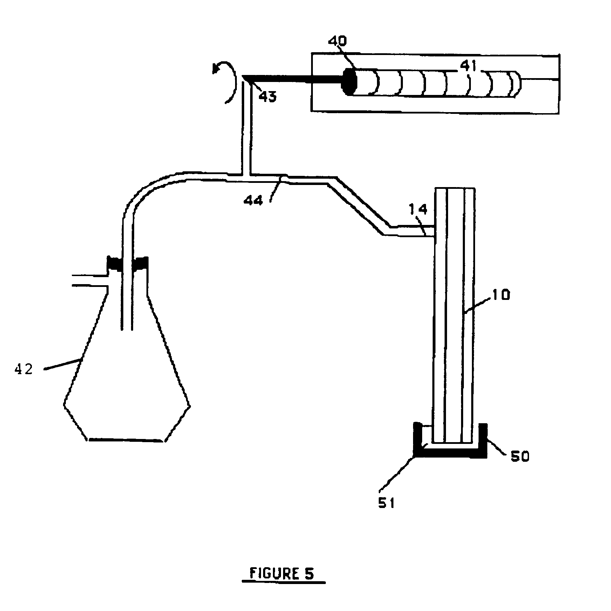

On se réfère également à la figure 5, qui illustre un mode de réalisation du dispositif conforme à l'invention, comprenant un moyen de réglage du gradient décroissant de pression ; le dispositif de la figure 5 comprend une chambre de développement 10, telle que décrite à la figure 3, vue de profil, associée, dans la réalisation représentée, à des moyens de mise sous pression réduite au niveau de l'orifice 14. Ces moyens de mise sous pression réduite comprennent une source de vide représentée par la pompe à vide 42, reliée au dispositif 10 par le conduit 44 ; ladite source de vide est également reliée à un moyen de réglage du gradient décroissant de pression représenté, dans cette réalisation, par une vis micrométrique 40 couplée à un moteur pas-à-pas 41, qui permet le réglage de l'obturation d'une prise d'air 43, placée sur le parcours du conduit 44.

Le moteur 41 est avantageusement programmable, tant au niveau de la vitesse d'obturation du circuit de vide (conduit 44 et prise d'air 43), qu'au niveau du mode de sélection de variation de la vitesse d'obturation (linéaire ou exponentielle).

### Exemple 1 : Influence de la pression réduite sur la chromatographie.

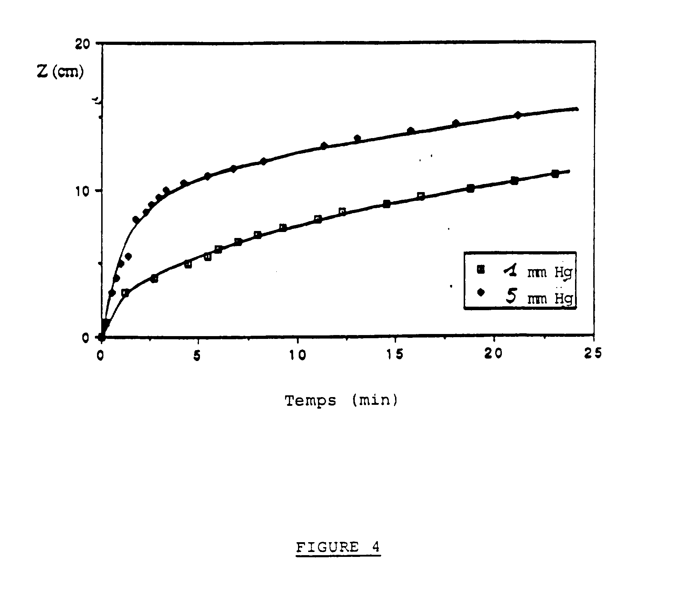

Les distances parcourues par un solvant (méthanol) à différents moments de la migration sont mesurés (Z). Ces distances sont représentées sur la figure 4, en fonction du temps. La courbe ◆ (5 mm de Hg) comprend deux parties : obtention d'une pression de 5 mm de Hg en 3 minutes, puis maintien de la dépression constante à 5 mm de Hg par arrêt du gradient de dépression. On peut constater que le gradient linéaire de dépression correspond à une variation linéaire de la distance parcourue en fonction du temps. A des pressions constantes, la distance ne progresse plus de façon contrôlée. Ces constatations peuvent également être faites en ce qui concerne la courbe 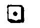 (1 mm de Hg). On peut voir que la vitesse de la phase mobile dans la chambre de développement à pression réduite est une fonction de la pression (P) et que cette relation n'est pas linéaire. Seule une diminution progressive de pression ΔP permet d'avoir une relation linéaire, si ΔP=f(t). Le dispositif de pression réduite permet donc la diminution progressive de P au cours de l'analyse pour assurer la linéarité de l'équation Z = kt.

### Exemple 2 : Dosage du pyruvate de sodium à l'aide du dispositif conforme à l'invention.

5 dépôts de 5 µl d'une solution de pyruvate de sodium à 1 g/l sont appliqués sur une plaque de silice TLC sans fluorescence (Merck, Darmstadt, RFA) de 200x200 mm.

La plaque est placée dans un dispositif conforme à l'invention, comme décrit précédemment.

La phase mobile est constituée de :

| | |
|---|---|
| Isopropanol | 70 |
| Eau déminéralisée | 35 |

La migration s'effectue sous une faible dépression, correspondant à 1 mm de Hg de dépression finale, obtenue par un gradient de 0 à 1 mm de Hg pendant 30 minutes.

La révélation est réalisée à l'aide du procédé décrit dans la Demande de Brevet Européen n° 909107753.4, par dérivation sous pression avec une solution de pourpre de bromocrésol :

| | |
|---|---|
| Pourpre de bromocrésol | 40 mg |
| Ethanol 50 % | 100 ml |
| NaOH concentré | q.s.p. pH 10 |

Parallèlement on réalise une migration en CCM, dans les mêmes conditions opératoires.

Dans les deux cas, une zone de démixage apparaît, mais avec une largeur nettement plus faible lorsque la chromatographie est réalisée à l'aide du dispositif conforme à l'invention ; de plus, les spots de pyruvate de sodium sont situés au dessus de la zone de demixage pour la CCM, contrairement à la chromatographie réalisée avec le dispositif conforme à l'invention.

Les Rf des spots sont de 0,85 dans les deux cas.

### Exemple 3 : Paramètre : vitesse de migration.

On réalise un dosage du pyruvate de sodium à l'aide du dispositif conforme à l'invention (cf. Exemple 2) ; la durée de migration est de 30 minutes (± 1 minute).

Pour des développements réalisés dans les mêmes conditions opératoires, mais avec un dispositif de CCM classique, la migration dure 50 minutes (± 2 minutes).

Ainsi que cela ressort de ce qui précède, l'invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée, de la présente invention.

## Revendications

1. Dispositif de chromatographie planaire à développement en flux forcé du type comprenant une chambre de développement (10), contenant au moins une plaque de chromatographie (20) recouverte d'une couche (21) d'adsorbant approprié et des moyens (30) pour recouvrir la plaque, lequel dispositif est caractérisé en ce qu'il comprend en outre des moyens de mise en pression réduite (42, 44) de ladite chambre et de ladite couche d'adsorbant, couplés à un moyen de réglage d'un gradient décroissant de pression (40, 41, 43) et en ce que les moyens (30) pour recouvrir ladite/lesdites plaques sont hermétiques et constitués d'une membrane hydrophobe et imperméable aux solvants de migration.

2. Dispositif selon la revendication 1, caractérisé en ce que ledit moyen de mise en pression réduite est une pompe à vide (42).

3. Dispositif selon la revendication 1 ou la revendication 2, caractérisé en ce que ladite membrane est constituée d'une mousse de polyéthylène à cellules fermées.

4. Dispositif selon l'une quelconque des revendications 1 à 3, caractérisé en ce qu'il comprend plusieurs plaques chromatographiques séparées respectivement par une membrane appropriée.

5. Procédé de détection et/ou de dosage en chromatographie planaire, dans une chambre de développement chromatographique contenant au moins une plaque de chromatographie appropriée recouverte d'une couche d'adsorbant convenable, caractérisé en ce que la migration de la phase mobile à travers la phase stationnaire est réalisée par traction, par application, dans ladite chambre de développement, d'une pression réduite homogène au niveau de ladite couche d'adsorbant recouvrant ladite plaque de chromatographie, elle-même recouverte d'une membrane hydrophobe et imperméable aux solvants de migration, lequel procédé comprend les étapes suivantes :
(a) création d'une réduction de pression graduelle dans la chambre de développement et dans la couche d'adsorbant, en fournissant un gradient décroissant de pression,
(b) réalisation de la migration d'une phase mobile à travers une phase stationnaire, dans les conditions de l'étape (a) et
(c) détection et développement des éléments ayant migré.

## Patentansprüche

1. Ebene Chromatographie-Vorrichtung zur Entwicklung mit beschleunigtem Fluß vom Typ, umfassend eine Entwicklungskammer (10), enthaltend mindestens eine Chromatographieplatte (20), die mit einer geeigneten Adsorptionsschicht (21) bedeckt ist, und Mittel (30), um die Platte wiederzugewinnen, dadurch **gekennzeichnet**, daß sie weiterhin Mittel zur Erzeugung eines verminderten Drucks (42, 44) in der Kammer und an der Adsorptionsschicht umfaßt, die mit einem Mittel zur Regulierung eines abnehmenden Druckgradienten (40, 41, 43) verbunden sind, und daß die Mittel (30) zur Wiedergewinnung der Platte(n) hermetisch sind und aus einer Membran bestehen, die hydrophob und für die Fließmittel undurchlässig ist.

2. Vorrichtung nach Anspruch 1, dadurch **gekennzeichnet**, daß das Mittel zur Erzeugung eines verminderten Drucks eine Vakuumpumpe (42) ist.

3. Vorrichtung nach Anspruch 1 oder 2, dadurch **gekennzeichnet**, daß die Membran aus einem geschlossenzelligen Polyethylenschaum besteht.

4. Vorrichtung nach einem der Ansprüche 1 bis 3, dadurch **gekennzeichnet**, daß sie mehrere Chromatographieplatten, die jeweils durch eine geeignete Membran getrennt sind, umfaßt.

5. Verfahren zur Detektion und/oder zur Bestimmung mittels ebener Chromatographie in einer chromatographischen Entwicklungskammer, die mindestens eine geeignete Chromatographieplatte, die mit einer geeigneten Adsorptionsschicht bedeckt ist, enthält, dadurch **gekennzeichnet**, daß die Wanderung der mobilen Phase durch die stationäre Phase durch Zugkräfte durch Anlegen eines homogenen verminderten Drucks in der die Chromatographieplatte bedeckenden adsorbierenden Schicht, die mit einer hydrophoben und für die Fließmittel undurchlässigen Membran bedeckt ist, in der Entwicklungskammer erfolgt, umfassend die folgenden Stufen:
(a) Erzeugung einer graduellen Verminderung des Drucks in der Entwicklungskammer und in der Adsorptionsschicht durch Anlegen eines abnehmenden Druckgradienten,
(b) Durchführung der Wanderung einer mobilen Phase durch eine stationäre Phase unter den Bedingungen der Stufe (a) und
(c) Nachweis und Entwicklung der gewanderten Teilchen.

## Claims

1. Forced flow development thin-layer chromatography device, of the type comprising a development chamber (10), containing at least one chromatography plate (20) covered with a layer of suitable adsorbent (21) and means (30) for covering the said plate(s), said device being characterised in that it further comprises pressure-reducing means (42, 44) of said chamber and said layer of adsorbent, coupled to a means for adjusting a descending pressure gradient (40, 41, 43) and in that the means (30) for covering the said plate(s) are hermetic and consist of a membrane which is hydrophobic and impermeable to the migration solvents.

2. Device according to claim 1, characterised in that the said pressure-reducing means is a vacuum pump (42).

3. Device according to claim 1 or claim 2, characterised in that the said membrane consists of a polyethylene foam containing closed cells.

4. Device according to any one of claims 1 to 3, characterised in that it comprises a number of chromatographic plates separated respectively by a suitable membrane.

5. Process for detection and/or for quantitative determination by thin-layer chromatography, in a chromatographic development chamber containing at least a suitable chromatography plate covered with a layer of suitable adsorbent, characterised in that the migration of a mobile phase through the stationary phase is carried out by pulling, by applying, in the said development chamber, a homogeneous reduced pressure at the level of said adsorbent layer, covering said chromatographic plate, itself covered by a membrane which is hydrophobic and impermeable to the migration solvents, said process comprising the following steps:
(a) creating a gradual descending pressure in the development chamber and in the adsorbent layer by providing a decreasing pressure gradient,
(b) performing the migration of a mobile phase under the conditions of step (a) and
(c) detection and revelation of the elements having migrated.
